# EUROPEAN PATENT APPLICATION

(11) **EP 4 311 693 A1**
(43) Date of publication of application: **31.01.2024**
(21) Application number: 23185458.9
(22) Date of filing: 14.07.2023
(51) Int. Cl.: B60C 19/00, B60C 5/00

(54) **PNEUMATIC TIRE**

(30) Priority: 29.07.2022 JP 2022121202; 09.11.2022 JP 2022179835
(71) Applicant: Sumitomo Rubber Industries, Ltd., Kobe-shi, Hyogo-ken 651-0072 (JP)
(72) Inventor: SATO, Takuya, Kobe-shi, 651-0072 (JP); MATSUNAMI, Sho, Kobe-shi, Hyogo 651-0072 (JP); YUKAWA, Naoki, Kobe-shi, 651-0072 (JP)
(74) Representative: Manitz Finsterwald Patent- und Rechtsanwaltspartnerschaft mbB

(57) **Abstract**

Provided is a pneumatic tire that can achieve both improved efficiency of puncture repair with a puncture repair material and noise performance. The pneumatic tire is a pneumatic tire 1 having a tread portion 2. A sponge-like sound absorbing member 9 is firmly attached to an inner surface 2b of the tread portion 2. The sound absorbing member 9 has an outer peripheral surface 9a facing outward in a tire radial direction. A plurality of grooves 10, and a plurality of land portions 11 separated from each other by the plurality of grooves 10, are formed in the outer peripheral surface 9a. Each of the plurality of grooves 10 has an opening width w1 at the outer peripheral surface 9a larger than a groove bottom width w2 of the groove 10 in a cross-section thereof perpendicular to a longitudinal direction of the groove 10.

## Description

### BACKGROUND OF THE INVENTION

### Field of the Invention

The present invention relates to a pneumatic tire having a tread portion.

### Background Art

There has conventionally been a known pneumatic tire in which a sound absorbing part is provided on the inner surface of a tread portion in order to reduce road noise. For example, Japanese Laid-Open Patent Publication No. 2019-108034 proposes a pneumatic tire in which protrusions and recesses are formed on the inward surface in the tire radial direction of a sound absorbing part to further reduce road noise.

### SUMMARY OF THE INVENTION

However, according to the inventor's study, when repairing a puncture in an area where the sound absorber is adhered to using repair fluid, the loading time required to repair the puncture might be longer because the repair fluid is supplied through the sound absorber.

The present invention has been made in view of the above circumstances, and a major object of the present invention is to provide a pneumatic tire in which a sponge-like sound absorbing member is basically provided on an inner surface of a tread portion and which can achieve both improved efficiency of puncture repair with a puncture repair material and noise performance.

The present invention is directed to a pneumatic tire including a tread portion, wherein: a sponge-like sound absorbing member is firmly attached to an inner surface of the tread portion; the sound absorbing member has an outer peripheral surface facing outward in a tire radial direction; a plurality of grooves, and a plurality of land portions separated from each other by the plurality of grooves, are formed in the outer peripheral surface; and each of the plurality of grooves has an opening width at the outer peripheral surface larger than a groove bottom width of the groove in a cross-section thereof perpendicular to a longitudinal direction of the groove.

As a result of having the above-described configuration, the pneumatic tire according to the present invention can achieve both improved efficiency of puncture repair with a puncture repair material and noise performance.

### BRIEF DESCRIPTION OF THE DRAWINGS

FIG. 1 is a cross-sectional view illustrating an embodiment of the pneumatic tire according to the present invention;
FIG. 2 is a partial perspective view of a sound absorbing member;
FIG. 3 is an enlarged cross-sectional view perpendicular to a longitudinal direction of a groove;
FIG. 4 is an enlarged cross-sectional view perpendicular to a longitudinal direction of a groove having chamfered portions formed therein;
FIG. 5 is a development of the sound absorbing member according to the embodiment as viewed from above an outer peripheral surface thereof;
FIG. 6 is a partial cross-sectional view of the pneumatic tire;
FIG. 7 is a schematic diagram showing the material of the sound absorbing member;
FIG. 8 illustrates manufacturing of the sound absorbing member; and
FIG. 9 is a development of a sound absorbing member according to another embodiment as viewed from above an outer peripheral surface thereof.

### DETAILED DESCRIPTION

Hereinafter, an embodiment of the present invention will be described in detail with reference to the drawings.

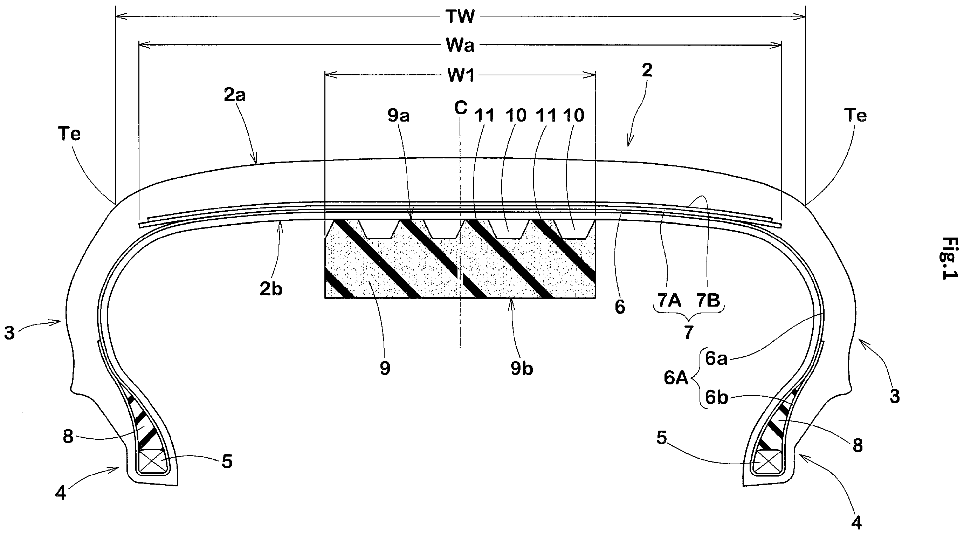

FIG. 1 is a tire meridian cross-sectional view of a pneumatic tire 1 according to the present embodiment in a standardized state, including the rotation axis of the pneumatic tire 1. Here, the "standardized state" is a state where: the pneumatic tire 1 is fitted on a standardized rim and adjusted to a standardized internal pressure; and no load is applied to the pneumatic tire 1. Hereinafter, unless otherwise specified, dimensions and the like of components of the pneumatic tire 1 are values measured in the standardized state.

If there is a standard system including a standard on which the pneumatic tire 1 is based, the "standardized rim" is a rim that is defined for each tire by the standard, and is, for example, the "standard rim" in the JATMA standard, the "Design Rim" in the TRA standard, or the "Measuring Rim" in the ETRTO standard. If there is no standard system including a standard on which the pneumatic tire 1 is based, the "standardized rim" is a rim having the smallest rim diameter and having the smallest rim width, among rims to which the pneumatic tire 1 can be fitted and which do not cause air leakage.

If there is a standard system including a standard on which the pneumatic tire 1 is based, the "standardized internal pressure" is an air pressure that is defined for each tire by each standard, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. If there is no standard system including a standard on which the pneumatic tire 1 is based, the "standardized internal pressure" is an air pressure that is defined for each tire by the manufacturer or the like.

As shown in FIG. 1, the pneumatic tire 1 according to the present embodiment has a tread portion 2 that extends annularly, a pair of sidewall portions 3 that are provided on both sides in the tire axial direction of the tread portion 2, and bead portions 4 that are provided inward of the respective sidewall portions 3 in the tire radial direction.

The tread portion 2 of the present embodiment has an outer surface 2a that forms a ground-contact surface that is brought into contact with a road surface during running. The sidewall portions 3 preferably extend inward in the tire radial direction from both sides in the tire axial direction of the tread portion 2. For example, a buttress portion is provided between the tread portion 2 and each sidewall portion 3. Each bead portion 4 includes, for example, a portion that is brought into contact with a rim when the tire 1 is fitted onto the rim. The bead portion 4 of the present embodiment has a bead core 5 that extends annularly. The bead core 5 is formed of, for example, a steel wire.

The pneumatic tire 1 of the present embodiment has a carcass 6 that extends from the tread portion 2 to the pair of bead portions 4 through the pair of sidewall portions 3, and a belt layer 7 that is provided outward of the carcass 6 in the tire radial direction in the tread portion 2. The pneumatic tire 1 may have, for example, a band layer (not shown) that is provided outward of the belt layer 7 in the tire radial direction.

The carcass 6 preferably extends toroidally between the bead cores 5 of the pair of bead portions 4 through the tread portion 2 and the pair of sidewall portions 3. The carcass 6 includes at least one (e.g., one) carcass ply 6A. The carcass ply 6A of the present embodiment extends on and between the pair of bead portions 4 through the tread portion 2 and the pair of sidewall portions 3.

The carcass ply 6A includes, for example, a body portion 6a that extends from the tread portion 2 to the bead core 5 of the bead portion 4 through the sidewall portion 3, and a turned-up portion 6b that is connected to the body portion 6a and turned up around the bead core 5 from the inside to the outside in the tire axial direction. Such a carcass 6 enhances the stiffness of the bead portion 4 and serves to improve the durability of the pneumatic tire 1.

The belt layer 7 includes one or more (e.g., two) belt plies 7A and 7B. The two belt plies 7A and 7B include, for example, a first belt ply 7A located on the inner side in the tire radial direction, and a second belt ply 7B located outward of the first belt ply 7A in the tire radial direction. Such a belt layer 7 enhances the stiffness of the tread portion 2 and serves to improve the durability of the pneumatic tire 1.

The pneumatic tire 1 has, for example, bead apexes 8 that are provided in the bead portions 4 and extend outward in the tire radial direction. For example, each bead apex 8 extends outward in the tire radial direction from the bead core 5, between the body portion 6a and the turned-up portion 6b of the carcass 6. Such a bead apex 8 enhances the stiffness of the bead portion 4 and serves to improve the durability of the pneumatic tire 1.

The pneumatic tire 1 of the present embodiment has a sponge-like sound absorbing member 9 that is provided on an inner surface 2b in the tire radial direction of the tread portion 2. The sound absorbing member 9 preferably has an outer peripheral surface 9a that faces outward in the tire radial direction, and an inner peripheral surface 9b that faces inward in the tire radial direction. The sound absorbing member 9 of the present embodiment is firmly attached at the outer peripheral surface 9a to the inner surface 2b of the tread portion 2.

Such a sound absorbing member 9 can reduce the road noise of the pneumatic tire 1 and can improve the noise performance of the pneumatic tire 1. Here, the sound absorbing member 9 may be firmly attached to the inner surface 2b by a sticky agent, an adhesive agent, a double-sided tape, or the like, or alternatively, may be fixed to the inner surface 2b by a sealant or the like applied to the inner surface 2b.

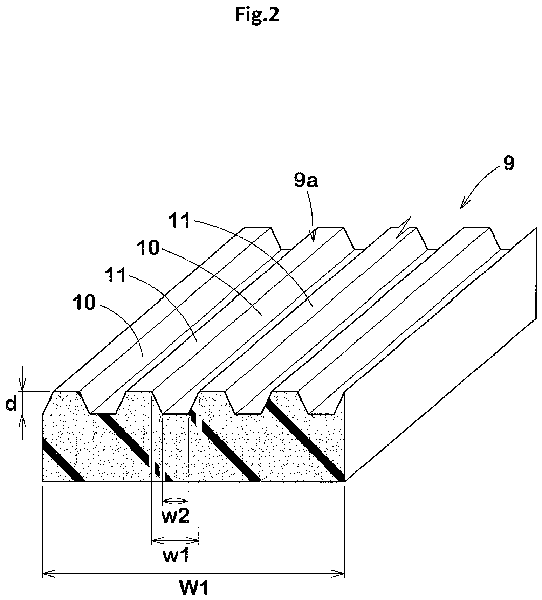

FIG. 2 is a partial perspective view of the sound absorbing member 9. As shown in FIG. 1 and FIG. 2, a plurality of grooves 10, and a plurality of land portions 11 separated from each other by the plurality of grooves 10, are formed in the outer peripheral surface 9a of the sound absorbing member 9 of the present embodiment. In the present embodiment, the plurality of land portions 11 are each firmly attached to the inner surface 2b of the tread portion 2 continuously along a longitudinal direction of the groove 10.

When the pneumatic tire 1 has a puncture, such a sound absorbing member 9 allows a puncture repair material to be fed to a puncture area through the groove 10, thereby allowing reliable repair of the puncture area. In addition, since spaces are formed between the sound absorbing member 9 and the tread portion 2 by the grooves 10, when heat is generated by the tread portion 2 during high speed running, heat accumulation by the sound absorbing member 9 can be reduced.

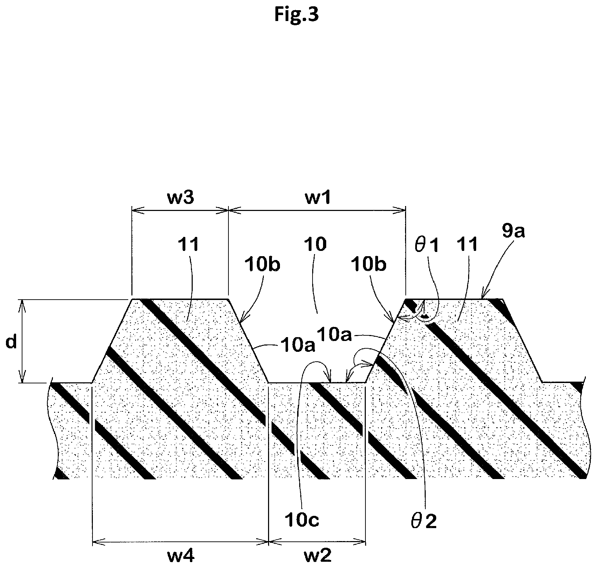

FIG. 3 is an enlarged cross-sectional view perpendicular to the longitudinal direction of the groove 10. As shown in FIG. 2 and FIG. 3, the plurality of grooves 10 of the present embodiment each have an opening width w1 at the outer peripheral surface 9a larger than a groove bottom width w2 of the groove 10 in a cross-section thereof perpendicular to the longitudinal direction of the groove 10.

Such a sound absorbing member 9 can reduce the attached area thereof to the inner surface 2b of the tread portion 2, making it easy to feed the puncture repair material to a puncture area while maintaining good noise performance of the pneumatic tire 1. Therefore, the pneumatic tire 1 of the present embodiment can achieve both improved efficiency of puncture repair with the puncture repair material and noise performance.

In a more preferable embodiment, the attached area of the outer peripheral surface 9a to the inner surface 2b is 10% to 48% of the projected area of the sound absorbing member 9 onto the inner surface 2b. As the attached area is not less than 10% of the projected area, the coming off of the sound absorbing member 9 can be suppressed, leading to an improvement in the durability of the pneumatic tire 1. As the attached area is not greater than 48% of the projected area, the area of the inner surface 2b which is not in contact with the sound absorbing member 9 can be increased, so that efficiency of puncture repair with the puncture repair material can be improved.

Each groove 10 has, for example, a trapezoidal cross-sectional shape in a cross-section thereof perpendicular to the longitudinal direction of the groove 10. Such a groove 10 can suppress a reduction in the volume of the sound absorbing member 9 while having an increased opening width w1 at the outer peripheral surface 9a, so that both improved efficiency of puncture repair with the puncture repair material and noise performance can be achieved.

The opening widths w1 of the plurality of grooves 10 of the present embodiment are equal to each other in a cross-section thereof perpendicular to the longitudinal direction of the groove 10. In addition, the groove bottom widths w2 of the plurality of grooves 10 of the present embodiment are equal to each other in a cross-section thereof perpendicular to the longitudinal direction of the groove 10. Such a sound absorbing member 9 can reduce non-uniformity in a direction perpendicular to the longitudinal direction, and therefore can improve the noise performance of the pneumatic tire 1 in a well-balanced manner.

Widths w3 at the outer peripheral surface 9a of the plurality of land portions 11 of the present embodiment are equal to each other in a cross-section thereof perpendicular to the longitudinal direction of the groove 10. The width w3 of each land portion 11 is preferably equal to the groove bottom width w2 of each groove 10. Maximum widths w4 of the plurality of land portions 11 of the present embodiment are equal to each other in a cross-section thereof perpendicular to the longitudinal direction of the groove 10. The maximum width w4 of each land portion 11 is preferably equal to the opening width w1 of each groove 10.

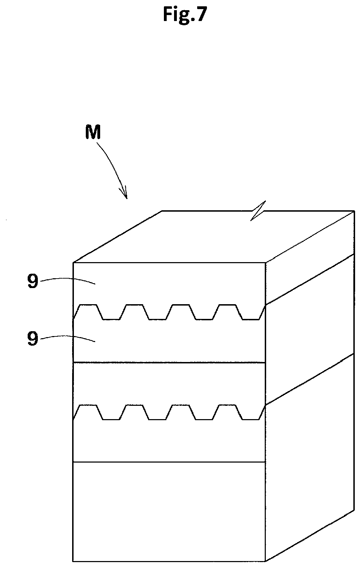

That is, the cross-sectional shape of each land portion 11 is preferably the same as the cross-sectional shape of each groove 10. In the case of such a sound absorbing member 9, when a single material M (shown in FIG. 7) is cut along the outer peripheral surface 9a and thereby divided into two portions, both of the two portions can be used as the sound absorbing member 9, resulting in a reduction in manufacturing loss.

The opening width w1 of each groove 10 is preferably 5 to 50 mm. As the opening width w1 is not less than 5 mm, a space is reliably formed between the groove 10 and the inner surface 2b, so that efficiency of puncture repair of the pneumatic tire 1 with the puncture repair material can be improved. As the opening width w1 is not greater than 50 mm, a good noise reduction effect of the sound absorbing member 9 can be maintained, so that the noise performance of the pneumatic tire 1 can be improved.

The groove bottom width w2 of each groove 10 is preferably 3 to 30 mm. As the groove bottom width w2 is not less than 3 mm, the cross-sectional area of the groove 10 can be increased, so that efficiency of puncture repair with the puncture repair material can be improved. In addition, in the case where the width w3 of each land portion 11 is equal to the groove bottom width w2, this case serves to maintain the strength of the sound absorbing member 9, so that the durability of the pneumatic tire 1 can be improved. As the groove bottom width w2 is not greater than 30 mm, a good noise reduction effect of the sound absorbing member 9 can be maintained, so that the noise performance of the pneumatic tire 1 can be improved.

Each groove 10 preferably has a groove depth d of 1 to 10 mm from the outer peripheral surface 9a. As the groove depth d is not less than 1 mm, a space is reliably formed between the groove 10 and the inner surface 2b, so that efficiency of puncture repair with the puncture repair material can be improved. From such a viewpoint, in the case where the means for firmly attaching the sound absorbing member 9 is a sticky agent or a double-sided tape, the groove depth d is preferably not less than 2 mm. In the case where the sound absorbing member 9 is firmly attached by a sealant, the groove depth d is preferably not less than 3 mm. As the groove depth d is not greater than 10 mm, a good noise reduction effect of the sound absorbing member 9 can be maintained, so that the noise performance of the pneumatic tire 1 can be improved.

As shown in FIG. 3, each groove 10 preferably has a pair of groove walls 10a. Each groove wall 10a of the present embodiment has a wall surface 10b that is inclined with respect to the outer peripheral surface 9a. An inclination angle θ1 between the wall surface 10b and the outer peripheral surface 9a is preferably 95 to 170°. Such a groove 10 has an obtuse inclination angle θ1, and thus can reduce a decrease in the strength of the land portion 11 and suppress the coming off of the sound absorbing member 9, so that the durability of the pneumatic tire 1 can be improved.

Each groove 10 preferably has a bottom surface 10c that connects the pair of wall surfaces 10b. An inclination angle θ2 between the wall surface 10b and the bottom surface 10c of the present embodiment is equal to the inclination angle θ1 between the wall surface 10b and the outer peripheral surface 9a. In such a sound absorbing member 9, the outer peripheral surface 9a and the bottom surface 10c can be formed so as to be parallel to each other, so that when the single material M (shown in FIG. 7) is cut along the outer peripheral surface 9a and thereby divided into two portions, it is useful to use both of the two portions as the sound absorbing member 9.

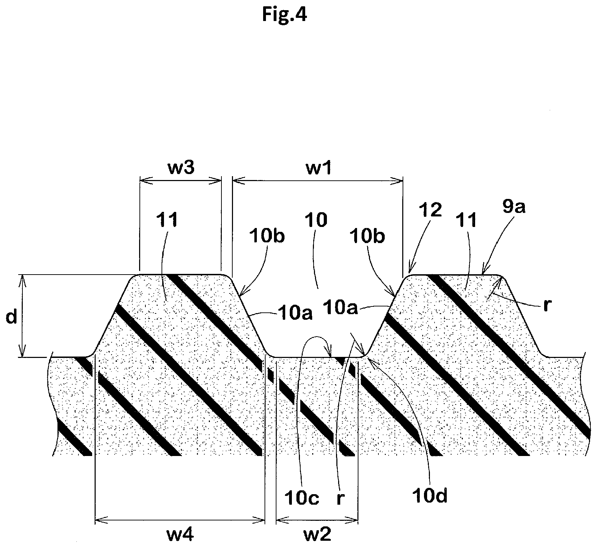

FIG. 4 is an enlarged cross-sectional view perpendicular to the longitudinal direction of a groove 10 having chamfered portions 10d formed therein. As shown in FIG. 4, for example, a chamfered portion 10d may be formed at each of corner portions between the wall surfaces 10b and the bottom surface 10c. The chamfered portion 10d is formed, for example, in an arc shape in a cross-section thereof perpendicular to the longitudinal direction of the groove 10. Such a groove 10 can reduce a decrease in the strength of the land portion 11 and suppress the coming off of the sound absorbing member 9, so that the durability of the pneumatic tire 1 can be improved.

A chamfered portion 12 having an arc shape is formed at each of corner portions between the wall surfaces 10b and the outer peripheral surface 9a of this embodiment. The chamfered portions 10d on the bottom surface 10c and the chamfered portions 12 on the outer peripheral surface 9a preferably have the same radius of curvature r. Such a land portion 11 maintains good strength and serves to suppress the coming off of the sound absorbing member 9.

The opening width w1 of the groove 10 having the chamfered portions 12 formed therein is preferably defined as the minimum distance between the chamfered portions 12. In addition, the groove bottom width w2 of the groove 10 having the chamfered portions 10d formed therein is defined, for example, as the length of a straight portion between the chamfered portions 10d. Similarly, preferably, the width w3 of the land portion 11 having the chamfered portions 12 formed therein is defined as the length of a straight portion between the chamfered portions 12, and the maximum width w4 of the land portion 11 having the chamfered portions 10d formed therein is defined as the maximum distance between the chamfered portions 10d.

The radius of curvature r of each of the chamfered portions 10d on the bottom surface 10c and the chamfered portions 12 on the outer peripheral surface 9a is preferably 0.5 to 2 mm. As the radius of curvature r is not less than 0.5 mm, the strength of the land portion 11 is maintained, and therefore, the coming off of the sound absorbing member 9 due to the deformation of the tread portion 2 during running can be suppressed. As the radius of curvature r is not greater than 2 mm, a decrease in the attached area of the sound absorbing member 9 can be reduced, leading to suppression of the coming off of the sound absorbing member 9.

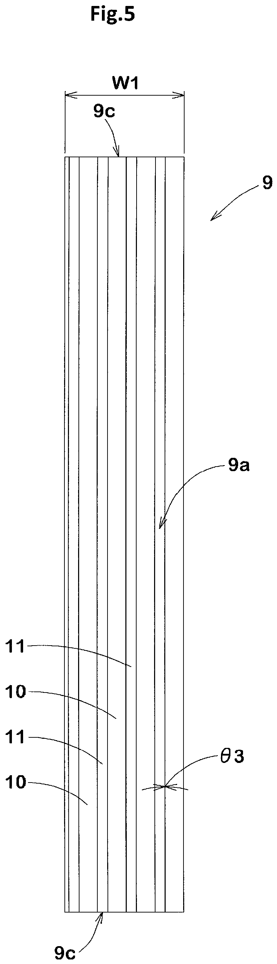

FIG. 5 is a development of the sound absorbing member 9 of the present embodiment as viewed from above the outer peripheral surface 9a. As shown in FIG. 5, each groove 10 of the present embodiment extends at an angle θ3 of less than 5° with respect to the tire circumferential direction. That is, each groove 10 can be said to extend in parallel to the tire circumferential direction. The sound absorbing member 9 has, for example, a pair of end surfaces 9c in the tire circumferential direction. Each groove 10 is preferably open at the pair of end surfaces 9c. Such a sound absorbing member 9 has both of a preferable attached area and a preferable strength, and can make the feeding of the puncture repair material more efficient in addition to suppression of the coming off of the sound absorbing member 9, so that both improved efficiency of puncture repair with the puncture repair material and durability of the pneumatic tire 1 can be achieved.

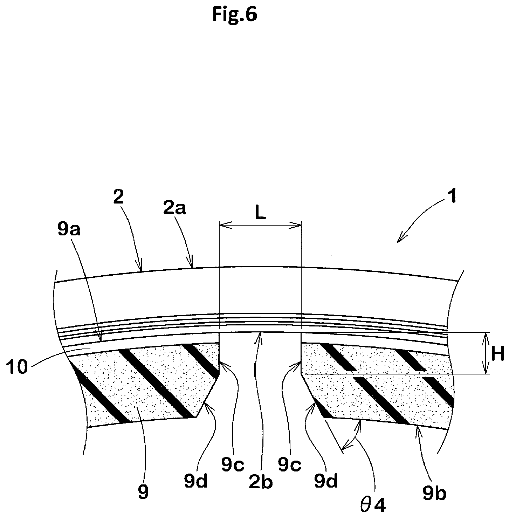

FIG. 6 is a partial cross-sectional view of the pneumatic tire 1 taken at a tire equator C. Here, the tire equator C is located at the center position between tread ground-contact ends Te on both sides in the tire axial direction shown in FIG. 1. The tread ground-contact ends Te are outermost ground-contact positions in the tire axial direction when a standardized load is applied to the pneumatic tire 1 in the standardized state and the tire 1 is brought into contact with a flat surface at a camber angle of 0°. In other words, a tread ground-contact width TW between the tread ground-contact ends Te is the maximum width of a ground-contact surface when a standardized load is applied to the pneumatic tire 1 in the standardized state.

If there is a standard system including a standard on which the pneumatic tire 1 is based, the "standardized load" is a load that is defined for each tire by each standard, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. If there is no standard system including a standard on which the pneumatic tire 1 is based, the "standardized load" is a load that is defined for each tire by the manufacturer or the like.

As shown in FIG. 6, a space L is formed between the pair of end surfaces 9c of the sound absorbing member 9 firmly attached to the inner surface 2b of the pneumatic tire 1 of the present embodiment. Such a sound absorbing member 9 allows the puncture repair material to be fed from the end surface 9c of the groove 10, so that efficiency of puncture repair with the puncture repair material can be improved.

The space L between the end surfaces 9c is preferably 3 to 60 mm. As the space L is not less than 3 mm, the puncture repair material can be reliably fed from the end surface 9c of the groove 10. As the space L is not greater than 60 mm, non-uniformity in the tire circumferential direction can be reduced, leading to suppression of occurrence of vibrations, noise, and the like during high speed running.

At least one (in the present embodiment, both) of the pair of end surfaces 9c has a tapered surface 9d whose height in the tire radial direction gradually becomes smaller. The tapered surface 9d of the present embodiment is formed in a flat surface shape. The tapered surface 9d may, for example, be formed in an arc shape. The coming off of such a sound absorbing member 9 from the end surface 9c, at which stress is concentrated during running, can be suppressed, leading to an improvement in the high speed durability of the pneumatic tire 1.

The tapered surface 9d of the present embodiment is formed in a portion of the end surface 9c. The portion of the end surface 9c in which the tapered surface 9d is not formed preferably has a height H of 3 to 10 mm. In such a sound absorbing member 9, damage to a sharp portion of the end surface 9c can be reduced, leading to an improvement in efficiency of the work of firmly attaching the sound absorbing member 9 to the inner surface 2b of the tread portion 2. It should be noted that the tapered surface 9d may be formed throughout the end surface 9c, for example.

The tapered surface 9d is preferably inclined at angle θ4 of 30 to 80° with respect to the inner peripheral surface 9b. As the angle θ4 with respect to the inner peripheral surface 9b is not less than 30°, the effect of absorbing sound by the sound absorbing member 9 can be maintained at a satisfactory level. As the angle θ4 with respect to the inner peripheral surface 9b is not greater than 80°, the effect of suppressing the coming off of the sound absorbing member 9 from the end surface 9c can be reliably achieved.

In the pneumatic tire 1 of the present embodiment, the single sound absorbing member 9 is firmly attached with the space L formed between the pair of end surfaces 9c in the tire circumferential direction. The pneumatic tire 1 of the present embodiment is not limited to such a mode. Alternatively, in the pneumatic tire 1, a plurality of sound absorbing members 9 may be firmly attached with spaces L formed in the tire circumferential direction. In that case, a space L is formed between the end surfaces 9c of adjacent sound absorbing members 9. For such a pneumatic tire 1, the quantity, shape, and the like of the sound absorbing members 9 can be selected, depending on the purpose.

As shown in FIG. 1, a width W1 in the tire axial direction of the sound absorbing member 9 is preferably smaller than a width Wa in the tire axial direction of the belt layer 7. With such a sound absorbing member 9, an excessive increase in the weight of the pneumatic tire 1 is suppressed, leading to an improvement in the handling stability of the pneumatic tire 1.

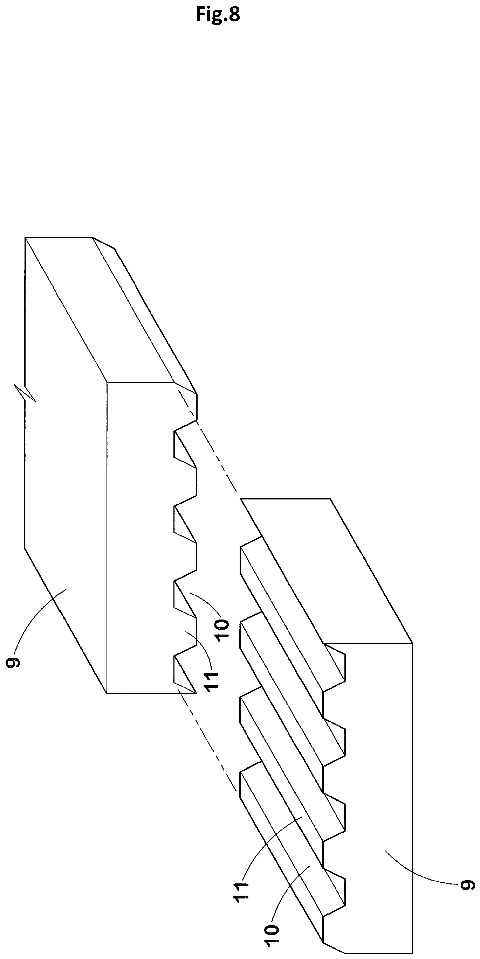

FIG. 7 is a schematic diagram showing the material M of the sound absorbing member 9, and FIG. 8 illustrates manufacturing of the sound absorbing member 9. As shown in FIG. 7 and FIG. 8, the sound absorbing member 9 of the present embodiment is manufactured by cutting the single material M along the outer peripheral surface 9a. As for the sound absorbing member 9, for example, the material M is cut along the grooves 10 and the land portions 11, is then slid in the longitudinal direction of the groove 10, and thereby is separated into two sound absorbing members 9.

The sound absorbing member 9 of the present embodiment is asymmetrical in the width direction thereof in a cross-section thereof perpendicular to the longitudinal direction of the groove 10. Therefore, as for the sound absorbing member 9 of the present embodiment, the separated two sound absorbing members 9 can be used as sound absorbing members 9 having the same shape, resulting in a further reduction in manufacturing loss.

A sponge material is suitably used as the material M of the sound absorbing member 9. Examples of the sponge material include ether-based polyurethane, ester-based polyurethane, and polyethylene. Such a sound absorbing member 9 can reduce road noise while suppressing weight increase. The sponge material is not limited to such a mode, and may be, for example, a rubber-based sponge material.

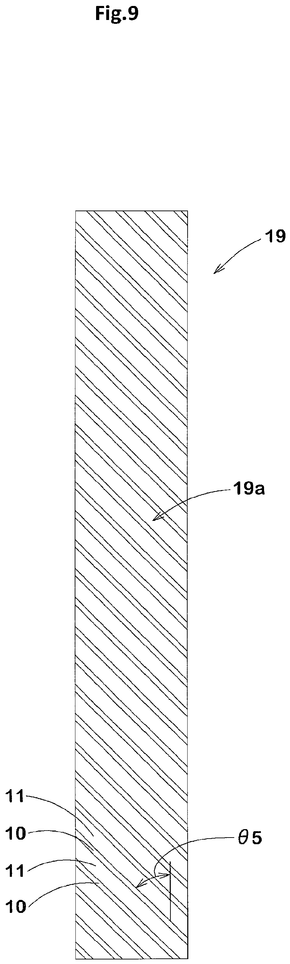

FIG. 9 is a development of a sound absorbing member 19 according to another embodiment as viewed from above an outer peripheral surface 19a thereof. As shown in FIG. 9, a plurality of grooves 10, and a plurality of land portions 11 separated from each other by the plurality of grooves 10, are formed in the outer peripheral surface 19a of the sound absorbing member 19 of the present embodiment, as in the above-described sound absorbing member 9. In the present embodiment as well, the plurality of land portions 11 are each firmly attached to the inner surface 2b of the tread portion 2 (shown in FIG. 1) continuously along a longitudinal direction of the groove 10.

Each groove 10 of the present embodiment extends at an angle θ5 of 5 to 90° with respect to the tire circumferential direction. In the case where the angle θ5 of the groove 10 is, for example, about 15 to 45°, the groove 10 effectively contributes to high speed durability. In the case where the angle θ5 of the groove 10 is close to 90°, the groove 10 effectively contributes to feeding of the puncture repair material. Therefore, the angle θ5 of the groove 10 is preferably 45 to 60°. Such a sound absorbing member 19 serves to achieve both high speed durability and efficiency of puncture repair.

Although the particularly preferred embodiments of the present invention have been described in detail above, the present invention is not limited to the above-described embodiments, and various modifications can be made to implement the present invention.

### EXAMPLES

Pneumatic tires having the basic structure in FIG. 1 were produced as test tires on the basis of specifications in Table 1 and Table 2. Noise performance, puncture repair time, and durability were evaluated using the produced test tires. The main common specifications and evaluation methods are as follows.

### <Common Specifications>

Tire size: 215/55R17
Width W1 of sound absorbing member: 120 mm
Material M of sound absorbing member: ether-based polyurethane

### <Noise Performance>

A test tire having an air pressure adjusted to 250 kPa was mounted to a drum tester installed in an anechoic room, and the sound pressure was measured when running at 120 km/h in a state where a load of 6.6 kN was applied to the tire, and was evaluated as an index whose value was higher as a cavity resonance sound peak value was lower. The results are represented as indexes with the result of Comparative Example 1 being regarded as 100. A higher value indicates that the cavity resonance sound peak value is lower and the noise performance is better.

### <Puncture Repair Time>

A test tire was punctured by penetrating a 5-mm-diameter nail through a center area of the tread portion of the test tire, and the puncture was repaired with a puncture repair material using a commercially available puncture repair kit. The time taken for the puncture repair material to stop flowing out from the puncture area was measured, and was evaluated as an index whose value was higher as the time was shorter. The results are represented as indexes with the result of Comparative Example 1 being regarded as 100. A higher value indicates that the time taken for the puncture repair material to stop flowing out is shorter and the puncture repair is performed more efficiently.

### <Durability>

A test tire having an air pressure adjusted to 250 kPa was mounted to a drum tester, and the state of the internal structure of the tire was evaluated after running for 30000 km at 120 km/h in a state where a load of 6.6 kN was applied to the tire. The results are represented as indexes with the result of Comparative Example 1 being regarded as 100. A higher value indicates that the state of the internal structure of the tire is better and the durability is better.

The results of the evaluation are shown in Table 1 and Table 2.

**[Table 1]**

| | Comp. Ex. 1 | Comp. Ex. 2 | Ex. 1 | Ex. 2 | Ex. 3 | Ex. 4 | Ex. 5 | Ex. 6 | Ex. 7 |
|---|---|---|---|---|---|---|---|---|---|
| Height of sound absorbing member (mm) | 22.5 | 25 | 25 | 25 | 25 | 25 | 25 | 25 | 25 |
| Attached area/projected area (%) | 100 | 50 | 37 | 11 | 48 | 32 | 47 | 45 | 23 |
| Opening width w1 of groove (mm) | - | 5.0 | 8.5 | 39.0 | 5.5 | 6.5 | 30.0 | 6.2 | 16.5 |
| Groove bottom width w2 of groove (mm) | - | 5.0 | 5.0 | 5.0 | 5.0 | 3.0 | 33.0 | 5.0 | 5.0 |
| Groove depth d of groove (mm) | - | 3 | 3 | 3 | 3 | 3 | 3 | 1 | 10 |
| Radius of curvature r of chamfered portion (mm) | - | 0 | 0 | 0 | 0 | 0 | 0 | 0 | 0 |
| Inclination angle θ1 between wall surface and outer peripheral surface (°) | - | 90 | 120 | 170 | 95 | 120 | 120 | 120 | 120 |
| Angles θ3 and θ5 of groove (°) | - | 0 | 0 | 0 | 0 | 0 | 0 | 0 | 0 |
| Angle θ4 of tapered surface (°) | 90 | 90 | 90 | 90 | 90 | 90 | 90 | 90 | 90 |
| Space L of sound absorbing member (mm) | 0 | 0 | 0 | 0 | 0 | 0 | 0 | 0 | 0 |
| Noise performance (index) | 100 | 95 | 100 | 100 | 100 | 100 | 100 | 100 | 100 |
| Puncture repair time (index) | 100 | 110 | 120 | 130 | 110 | 110 | 130 | 110 | 130 |
| Durability (index) | 100 | 110 | 120 | 120 | 110 | 120 | 110 | 110 | 120 |

**[Table 2]**

| | Ex. 8 | Ex. 9 | Ex. 10 | Ex. 11 | Ex. 12 | Ex. 13 | Ex. 14 | Ex. 15 | Ex. 16 | Ex. 17 |
|---|---|---|---|---|---|---|---|---|---|---|
| Height of sound absorbing member (mm) | 25 | 25 | 25 | 25 | 25 | 25 | 25 | 25 | 25 | 25 |
| Attached area/projected area (%) | 37 | 37 | 37 | 37 | 37 | 37 | 37 | 37 | 37 | 37 |
| Opening width w1 of groove (mm) | 8.5 | 8.5 | 8.5 | 8.5 | 8.5 | 8.5 | 8.5 | 8.5 | 8.5 | 8.5 |
| Groove bottom width w2 of groove (mm) | 5.0 | 5.0 | 5.0 | 5.0 | 5.0 | 5.0 | 5.0 | 5.0 | 5.0 | 5.0 |
| Groove depth d of groove (mm) | 3 | 3 | 3 | 3 | 3 | 3 | 3 | 3 | 3 | 3 |
| Radius of curvature r of chamfered portion (mm) | 0.5 | 2.0 | 0 | 0 | 0 | 0 | 0 | 0 | 0 | 0 |
| Inclination angle θ1 between wall surface and outer peripheral surface (°) | 120 | 120 | 120 | 120 | 120 | 120 | 120 | 120 | 120 | 120 |
| Angles θ3 and θ5 of groove (°) | 0 | 0 | 30 | 45 | 60 | 90 | 0 | 0 | 0 | 0 |
| Angle θ4 of tapered surface (°) | 90 | 90 | 90 | 90 | 90 | 90 | 30 | 80 | 90 | 90 |
| Space L of sound absorbing member (mm) | 0 | 0 | 0 | 0 | 0 | 0 | 0 | 0 | 3 | 60 |
| Noise performance (index) | 100 | 100 | 100 | 100 | 100 | 100 | 95 | 100 | 100 | 100 |
| Puncture repair time (index) | 120 | 120 | 120 | 120 | 120 | 120 | 120 | 120 | 130 | 140 |

As a result of the evaluation, it is confirmed that the pneumatic tire of each

Example has a shorter puncture repair time while maintaining the same noise performance, as compared to that of each Comparative Example, and achieves both improved efficiency of puncture repair with the puncture repair material and noise performance. In addition, it is confirmed that the pneumatic tire of each Example has better durability as compared to that of each Comparative Example.

### [Additional Note]

The present invention is as follows.

### [Present Invention 1]

A pneumatic tire including a tread portion, wherein
a sponge-like sound absorbing member is firmly attached to an inner surface of the tread portion,
the sound absorbing member has an outer peripheral surface facing outward in a tire radial direction,
a plurality of grooves, and a plurality of land portions separated from each other by the plurality of grooves, are formed in the outer peripheral surface, and
each of the plurality of grooves has an opening width at the outer peripheral surface larger than a groove bottom width of the groove in a cross-section thereof perpendicular to a longitudinal direction of the groove.

### [Present Invention 2]

The pneumatic tire according to Present Invention 1, wherein an attached area of the outer peripheral surface to the inner surface is 10% to 48% of a projected area of the sound absorbing member onto the inner surface.

### [Present Invention 3]

The pneumatic tire according to Present Invention 1 or 2, wherein each of the plurality of grooves has a trapezoidal cross-sectional shape in the cross-section.

### [Present Invention 4]

The pneumatic tire according to any one of Present Inventions 1 to 3, wherein
each of the plurality of grooves has a pair of groove walls,
each of the pair of groove walls has a wall surface inclined with respect to the outer peripheral surface, and
an inclination angle between the wall surface and the outer peripheral surface is 95 to 170°.

### [Present Invention 5]

The pneumatic tire according to Present Invention 4, wherein a chamfered portion is formed at each of corner portions between the wall surfaces and the outer peripheral surface.

### [Present Invention 6]

The pneumatic tire according to any one of Present Inventions 1 to 5, wherein
the groove bottom widths of the plurality of grooves are equal to each other in the cross-section,
widths at the outer peripheral surface of the plurality of land portions are equal to each other in the cross-section, and
each of the widths is equal to the groove bottom width.

### [Present Invention 7]

The pneumatic tire according to any one of Present Inventions 1 to 6, wherein the groove bottom width of each of the plurality of grooves is 3 to 30 mm, and each of the grooves has a groove depth of 1 to 10 mm.

### [Present Invention 8]

The pneumatic tire according to any one of Present Inventions 1 to 7, wherein each of the plurality of grooves extends at an angle of 5 to 90° with respect to a tire circumferential direction.

### [Present Invention 9]

The pneumatic tire according to any one of Present Inventions 1 to 7, wherein each of the plurality of grooves extends at an angle of less than 5° with respect to a tire circumferential direction.

### [Present Invention 10]

The pneumatic tire according to any one of Present Inventions 1 to 9, wherein
the sound absorbing member has a pair of end surfaces in the tire circumferential direction, and
a space is formed between the pair of end surfaces.

## Claims

1. A pneumatic tire (1) comprising a tread portion (2), wherein
a sponge-like sound absorbing member (9, 19) is firmly attached to an inner surface (2b) of the tread portion (2),
the sound absorbing member (9, 19) has an outer peripheral surface (9a, 19a) facing outward in a tire radial direction,
a plurality of grooves (10), and a plurality of land portions (11) separated from each other by the plurality of grooves (10), are formed in the outer peripheral surface (9a, 19a), and
each of the plurality of grooves (10) has an opening width (w1) at the outer peripheral surface (9a, 19a) larger than a groove bottom width (w2) of the groove (10) in a cross-section thereof perpendicular to a longitudinal direction of the groove (10).

2. The pneumatic tire (1) according to claim 1, wherein an attached area of the outer peripheral surface (9a, 19a) to the inner surface (2b) is 10% to 48% of a projected area of the sound absorbing member (9, 19) onto the inner surface (2b).

3. The pneumatic tire (1) according to claim 1 or 2, wherein each of the plurality of grooves (10) has a trapezoidal cross-sectional shape in the cross-section.

4. The pneumatic tire (1) according to claims 1 to 3, wherein
each of the plurality of grooves (10) has a pair of groove walls (10a),
each of the pair of groove walls (10a) has a wall surface (10b) inclined with respect to the outer peripheral surface (9a, 19a), and
an inclination angle (θ1) between the wall surface (10b) and the outer peripheral surface (9a, 19a) is 95 to 170°.

5. The pneumatic tire (1) according to claim 4, wherein a chamfered portion (12) is formed at each of corner portions between the wall surfaces (10b) and the outer peripheral surface (9a, 19a).

6. The pneumatic tire (1) according to claims 1 to 5, wherein
the groove bottom widths (w2) of the plurality of grooves (10) are equal to each other in the cross-section,
widths (w3) at the outer peripheral surface (9a, 19a) of the plurality of land portions (11) are equal to each other in the cross-section, and
each of the widths (w3) is equal to the groove bottom width (w2).

7. The pneumatic tire (1) according to claim 6, wherein
the groove bottom width (w2) of each of the plurality of grooves (10) is 3 to 30 mm, and
each of the grooves (10) has a groove depth (d) of 1 to 10 mm.

8. The pneumatic tire (1) according to claims 1 7, wherein each of the plurality of grooves (10) extends at an angle (θ5) of 5 to 90° with respect to a tire circumferential direction.

9. The pneumatic tire (1) according to claims 1 to 7, wherein each of the plurality of grooves (10) extends at an angle (θ3) of less than 5° with respect to a tire circumferential direction.

10. The pneumatic tire (1) according to claim 9, wherein
the sound absorbing member (9) has a pair of end surfaces (9c) in the tire circumferential direction, and
a space (L) is formed between the pair of end surfaces (9c).
